# EUROPÄISCHE PATENTSCHRIFT

(11) **EP 2 608 926 B1**
(45) Veröffentlichungstag und Bekanntmachung des Hinweises auf die Patenterteilung: **06.01.2016**
(21) Anmeldenummer: 12750573.3
(22) Anmeldetag: 10.08.2012
(51) Int. Cl.: B23Q 3/155, B23Q 3/157

(54) **WERKZEUGMASCHINE MIT MASCHINENMAGAZIN UND HINTERGRUNDMAGAZIN**
MACHINE TOOL WITH MACHINE MAGAZINE AND BACKGROUND MAGAZINE
MACHINE-OUTIL DOTEE D'UN MAGASIN DE MACHINE ET D'UN MAGASIN D'ARRIÈRE-PLAN

(30) Priorität: 09.09.2011 DE 102011113312; 26.03.2012 DE 102012102553
(43) Veröffentlichungstag der Anmeldung: 03.07.2013
(73) Patentinhaber: Chiron-Werke GmbH & Co. KG, 78532 Tuttlingen (DE)
(72) Erfinder: PRUST, Dirk, 78532 Tuttlingen (DE); KOHLER, Markus, 78194 Immendingen (DE)
(74) Vertreter: Witte, Weller & Partner Patentanwälte mbB
(86) Internationale Anmeldenummer: PCT/EP2012/065679
(87) Internationale Veröffentlichungsnummer: WO 2013/034392

(56) Entgegenhaltungen:
- DE-A1- 10 225 143
- DE-B3-102009 030 387
- DE-U1-202011 001 493

## Beschreibung

Die vorliegende Erfindung betrifft ein Werkzeugmagazin für eine Werkzeugmaschine mit einer Werkzeugspindel, in die Werkzeuge zur Bearbeitung von Werkstücken einspannbar sind, wobei in dem Werkzeugmagazin Werkzeughalter vorgesehen sind, in denen zum Einwechseln in die Werkzeugspindel vorgesehene Werkzeuge ablegbar sind, und wobei eine in sich geschlossene, dreidimensionale Laufbahn für die Werkzeughalter vorgesehen ist.

Ein derartiges Werkzeugmagazin ist aus der DE 10 2009 030 387 B3 bekannt.

Die Erfindung betrifft ferner eine Werkzeugmaschine mit einer Werkzeugspindel, in die Werkzeuge zur Bearbeitung von Werkstücken einspannbar sind, mit einer Übergabevorrichtung, in der zumindest ein zum Einwechseln in die Werkzeugspindel vorgesehenes Werkzeug vorrätig gehalten werden, und mit einem Hintergrundmagazin, in dem zum Einwechseln in die Übergabevorrichtung vorgesehene Werkzeuge vorrätig gehalten werden.

Eine derartige Werkzeugmaschine ist aus der DE 102 25 143 A1 bekannt.

Im Rahmen der vorliegenden Erfindung wird unter einer "Werkzeugmaschine" eine Anordnung zur Bearbeitung von Werkstücken mit in eine Werkzeugspindel eingespannten Werkzeugen verstanden, bei der die Werkzeugspindel und das Werkstück relativ zueinander zumindest in einer der drei orthogonalen Raumachsen x, y und z verfahrbar sind.

Dabei können alle drei Bewegungsrichtungen in der Werkzeugspindel realisiert werden, so dass diese in x-, y- und z-Richtung auf das Werkstück zugestellt wird. Es ist jedoch auch möglich, eine oder zwei Bewegungsrichtungen, insbesondere die x- und y-Richtung, in dem Werkstück zu realisieren.

Für die Realisierung der vorliegenden Erfindung ist es jedoch unerheblich, wie die Bewegungsachsen auf die Werkzeugspindel und das Werkstück verteilt werden.

Sofern alle drei Bewegungsrichtungen in der Werkzeugspindel realisiert sind, ist die Werkzeugmaschine vorzugsweise eine Fahrständermaschine mit vertikalachsiger Werkzeugspindel, die Werkzeugspindel wird also in vertikaler Richtung auf das Werkstück zugestellt. Es ist jedoch auch möglich, die Werkzeugspindel horizontal auszurichten, so dass die Zustellung horizontal erfolgt.

Ferner ist es möglich, entweder in der Werkzeugspindel und/oder in dem Werkstück weitere Schwenk- und Drehachsen anzuordnen.

Während der Bearbeitung der Werkstücke werden nacheinander unterschiedliche Werkzeuge in die Werkzeugspindel eingewechselt. Diese Werkzeuge werden in geeignet ausgebildeten Werkzeughaltern in einem Werkzeugmagazin vorrätig gehalten, das als Maschinenmagazin an der Werkzeugmaschine selbst angeordnet sein kann und in bestimmten Ausführungen die Fahrbewegungen der Werkzeugspindel zumindest teilweise mit vollzieht. Die Zahl der in einem solchen, ggf. mitfahrenden Maschinenmagazin zu lagernden Werkzeuge ist begrenzt, sie beträgt häufig 20, 30 oder auch 50 Werkzeuge.

Alternativ oder zusätzlich kann das Werkzeugmagazin auch als sogenanntes Hintergrundmagazin oder externes Werkzeugmagazin ausgebildet ein, in dem eine beliebige Anzahl von Werkzeugen vorrätig gehalten werden kann, und aus dem Werkzeuge entweder direkt in die Werkzeugspindel eingewechselt oder gegen Werkzeuge in einem zusätzlich vorhandenen Maschinenmagazin ausgetauscht werden.

Derartige Werkzeugmaschinen mit Werkzeugmagazinen sind aus dem Stand der Technik vielfach bekannt. Das Werkzeugmagazin ist dabei in der Regel an der Werkzeugmaschine angebracht und kann beispielsweise als Kettenmagazin oder als Tellermagazin ausgebildet sein.

Bei einem Kettenmagazin wird zum Beispiel eine massive Kette mit den an den Kettengliedern angebrachten Werkzeughaltern im Kreis hin- und hergefahren. Bei einem Tellermagazin ist eine kreisförmige Struktur mit umfänglich angeordneten Werkzeughaltern vorgesehen. Dieser Teller wird zum Werkzeugwechsel ebenfalls im Kreis hin- und hergefahren.

Aus der DE 197 24 635 A1 ist eine Werkzeugmaschine mit einem Hintergrundmagazin in Form eines Tellermagazins bekannt, bei der als Übergabevorrichtung ein Doppelgreifer vorgesehen ist, der Werkzeuge zwischen dem Tellermagazin und dem Arbeitsraum der Werkzeugmaschine hin- und hertransportiert. Der Doppelgreifer entnimmt dabei ein Werkzeug aus dem Tellermagazin und wird mit diesem Werkzeug dann in den Arbeitsraum geschwenkt. Dort fährt die Werkzeugspindel im Pick-up-Verfahren den Doppelgreifer an, legt das aktuell in die Werkzeugspindel eingespannte Werkzeug in dem freien Greifer des Doppelgreifers ab, und ergreift dann das zuvor aus dem Tellermagazin in den Doppelgreifer eingelegte Werkzeug.

Aus der DE 190 19 446 A1 ist eine Werkzeugmaschine bekannt, bei der das Maschinenmagazin als Kettenmagazin ausgebildet ist. Zum Werkzeugwechsel wird das Kettenmagazin in den Arbeitsraum der Werkzeugmaschine geschwenkt, wo ein Werkzeugwechsel zu der Werkzeugspindel im Pick-up-Verfahren stattfindet.

In dem jeweiligen Maschinenmagazin kann aber nur eine bestimmte Anzahl von Werkzeugen zwischengelagert werden, so dass häufig ein externes Werkzeugmagazin als Hintergrundmagazin vorgesehen ist, durch das weitere Werkzeuge bereitgestellt werden. Eine derartige Werkzeugmaschine beschreibt die DE 197 24 635 A1.

Eine ähnliche Konstruktion zeigt auch die DE 100 20 801 A1. Das Hintergrundmagazin ist hier als Regalmagazin ausgelegt, in dem eine sehr große Anzahl von Werkzeugen an räumlich festen Positionen zwischengespeichert werden kann. An dem Regalmagazin ist eine Entnahmevorrichtung vorgesehen, die die einzelnen Werkzeuge anfährt und aus ihrem festen Lagerplatz in dem Regalmagazin entnimmt. Danach wird das Werkzeug zu einer gegenüber dem Regalmagazin ortsfesten Übergabeposition transportiert.

Diese Übergabeposition wird auch von einem schwenkbar am Maschinengestell gelagerten Doppelgreifer bedient, der in der Übergabeposition ein Werkzeug an die Entnahmevorrichtung abgeben bzw. ein neues Werkzeug von der Entnahmevorrichtung entnehmen kann. Mit diesem neuen Werkzeug schwenkt der Doppelgreifer dann in die Nähe des Arbeitsraumes der Werkzeugmaschine, wo er das neue Werkzeug für einen Werkzeugwechsel im Pick-up-Verfahren bereitstellt. Dieser Doppelgreifer ist eine Übergabevorrichtung im Sinne der vorliegenden Anmeldung.

Wenn die Werkzeugspindel einen Bearbeitungsvorgang beendet hat, fährt sie zu der Spindelposition des Doppelgreifers und legt zunächst das bisher verwendete Werkzeug in dem freien Greifer ab. Danach ergreift die Werkzeugspindel das neu aus dem Regalmagazin herangebrachte Werkzeug und fährt wieder in den Arbeitsraum, wo mit dem neuen Werkzeug die Bearbeitung des Werkstückes fortgesetzt wird.

Die Zahl der bei dieser Konstruktion zur Verfügung stehenden Werkzeuge ist theoretisch beliebig groß, so dass durch das Hintergrundmagazin zusammen mit der Übergabevorrichtung und dem Doppelgreifer die bei Maschinenmagazinen aus Platzgründen vorhandene Problematik der limitiert zur Verfügung stehenden Werkzeuge beseitigt ist.

Die bekannte Konstruktion ist jedoch konstruktiv aufwändig, wobei der Werkzeugwechsel für viele Anwendungsfälle auch nicht schnell genug ist.

Davon ausgehend beschreibt die DE 102 25 143 A1 eine Werkzeugmaschine, bei der die Übergabevorrichtung ein Maschinenmagazin ist, in dem zwar nur eine begrenzten Anzahl von Werkzeugen gespeichert werden kann, das dafür aber die Möglichkeit eines schnelles Werkzeugwechsels bietet. Diese Vorteile werden jetzt kombiniert mit den Vorteilen des Hintergrundmagazins, bei dem die Speichermöglichkeit für eine beliebig große Anzahl von Werkzeugen ausgenutzt werden kann.

Die bekannte Werkzeugmaschine ermöglicht damit zum einen den schnellen Werkzeugwechsel mit Hilfe des Maschinenmagazins, wobei zwischen dem Hintergrundmagazin und dem Maschinenmagazin Werkzeuge ausgetauscht werden können, so dass das Maschinenmagazin sozusagen virtuell auf die Größe des Hintergrundmagazins ausgedehnt wurde.

Bei den bekannten Hintergrundmagazinen und externen Werkzeugmagazinen ist von Nachteil, dass sie konstruktiv aufwändig sind und zudem häufig einen großen Stellplatz neben oder hinter der Werkzeugmaschine benötigen.

Das aus der eingangs erwähnten DE 10 2009 030 387 B3 bekannte Werkzeugmagazin ist ein Kettenmagazin, bei dem die Kette derart dreidimensional verläuft, dass sie einen vertikalen Speicherbereich sowie einen horizontalen Speicherbereich durchläuft.

Vor diesem Hintergrund liegt der vorliegenden Erfindung die Aufgabe zugrunde, ein Werkzeugmagazin der eingangs genannten Art bereitzustellen, in dem prinzipiell eine unbegrenzte Anzahl von Werkzeugen bereitgehalten werden kann, das jedoch konstruktiv einfach aufgebaut ist und einen geringen Platzbedarf erfordert.

Erfindungsgemäß wird diese Aufgabe bei dem eingangs erwähnten Werkzeugmagazin dadurch gelöst, dass an der Laufbahn Werkzeugschlitten verschiebbar gelagert sind, an denen die Werkzeughalter ausgebildet sind, und die Laufbahn in Form zumindest einer Spirale mit vertikal übereinander verlaufenden Windungen angeordnet ist.

Bei der eingangs erwähnten Werkzeugmaschine wird diese Aufgabe dementsprechend erfindungsgemäß dadurch gelöst, dass das neue Werkzeugmagazin als Hintergrundmagazin eingesetzt wird.

Bei dem neuen Werkzeugmagazin ist insbesondere von Vorteil, dass nicht wie bei einem Ketten- oder Tellermagazin die Haltestruktur verfahren wird, an der die Werkzeughalter befestigt sind, sondern lediglich die einzelnen Werkzeugschlitten an einer Laufbahn verfahren werden, die in beliebigen dreidimensionalen geometrischen Formen, also räumlich angeordnet werden kann. Diese Laufbahn ist also eine Endlosbahn, an/auf der die Werkzeugschlitten im Kreis und/oder hin und her geschoben oder gefahren werden können.

Die Werkzeugschlitten sind dabei nicht Teil einer Kette oder über eine Kette, einen Riemen oder ein sonstiges Element eines Zugmitteltriebes in festen Abständen zueinander angeordnet oder miteinander verbunden, sie können vielmehr unabhängig voneinander an der Laufbahn verfahren werden.

Jeder Werkzeugschlitten kann daher auch einzeln angetrieben werden, so dass die erforderlichen Beschleunigungskräfte geringer sind als bei Kettenmagazinen.

Damit sind auch die mechanischen Belastungen, denen die einzelnen Werkzeugschlitten ausgesetzt sind, gering, so dass die Werkzeugschlitten zumindest zum Teil auch aus Kunststoff gefertigt werden können.

Damit kann auch an einer beliebigen Stelle längs der Laufbahn eine Übergabeposition vorgesehen sein. Die Werkzeugschlitten werden also auf oder an der Laufbahn zu der Übergabeposition gefahren, wo die Werkzeuge in eine Übergabevorrichtung übergeben werden, die ein Maschinenmagazin oder ein Greifer sein kann, der direkt die Werkzeugspindel bedient. An den Werkzeugschlitten sind dazu Werkzeughalter vorgesehen, deren Ausgestaltung im Rahmen der vorliegenden Erfindung keine zentrale Rolle spielt, zumal Werkzeughalter als solche aus dem Stand der Technik hinreichend bekannt sind.

Der Erfinder der vorliegenden Anmeldung hat nun erkannt, dass die starre Struktur der bekannten Werkzeugmagazine nur eine flächige Anordnung ermöglicht, so dass mit zunehmender Zahl von zu speichernden Werkzeugen die Fläche für die bekannten Werkzeugmagazine zunimmt.

Die bekannten Werkzeugmagazine ermöglichen wegen der Kettentriebe keine dreidimensionale geschlossene Laufbahn, vielmehr sind mäanderförmige Strukturen bekannt, die entweder in der waagerechten oder senkrechten Ebene verlaufen. Waagerechte Strukturen sind besonders für die Versorgung von vertikalachsigen Werkzeugspindeln, senkrechte Strukturen für die Versorgung von waagerechten Werkzeugspindeln geeignet, weil dann die Werkzeuge zum Werkzeugwechsel nicht auch noch um 90° gekippt werden müssen.

Dreidimensionale Speicherstrukturen, die sich also sowohl in der waagerechten als auch in der senkrechten Ebene jeweils in beiden Dimensionen ausdehnen, sind aus dem Stand der Technik nur für Scheibenmagazine mit mehreren Etagen bekannt. Durch die Größer und die Anzahl der einzelnen Scheiben kann die Speicherkapazität beeinflusst werden. Allerdings sind auch hier komplexe Übergabe- und Entnahmevorrichtungen erforderlich. Eine in sich geschlossene Laufbahn ist bei diesem Stand der Technik nicht zu realisieren.

Die Laufbahn der erfindungsgemäßen Werkzeugmagazine weist dagegen eine räumliche dreidimensionale Struktur auf, bei der die Laufbahn in Etagen übereinander wie in einer Art Regal angeordnet ist. Bei gleicher Aufstellfläche lassen sich so durch Vergrößerung des Aufbaus nach oben bei Bedarf mehr Werkzeuge speichern. Umgekehrt lassen sich bei gleicher Höhe auch durch Vergrößerung der Aufstellfläche mehr Werkzeuge speichern.

Unter einer "dreidimensionalen Laufbahn" wird im Rahmen der Erfindung also eine sich in allen drei Raumachsen ersteckende Laufbahn verstanden, an der die Werkzeugschlitten so verfahren werden, dass sie sich nicht lediglich in einer horizontalen, schrägen oder vertikalen Ebene sondern abwechselnd in Richtung aller drei Raumachsen bewegen.

Zumindest während bestimmter Bewegungsabschnitte fahren die Werkzeugschlitten mit einer Bewegungskomponente jeweils in eine der drei Raumachsen.

Eine regalartige Anordnung der Werkzeuge ist übrigens aus der DE 100 20 801 A1 bekannt, dort ist aber eine komplexe, zu jeder Speicherposition in dem Regal verfahrbare Entnahmevorrichtung erforderlich, weil die Werkzeuge starr in dem Regal abgelegt sind.

Das neue Werkzeugmagazin benötigt so eine Entnahmevorrichtung nicht, denn trotz begrenzter Aufstellfläche kann auch bei nahezu beliebig zunehmender Anzahl an gespeicherten Werkzeugen jedes Werkzeug mit seinem Werkzeugschlitten zu der Übergabeposition verfahren werden.

Das neue Werkzeugmagazin kann als Hintergrundmagazin und externes Werkzeugmagazin für beliebige Werkzeugmaschinen eingesetzt werden, insbesondere wird es mit den aus den eingangs erwähnten Veröffentlichungen bekannten Werkzeugmaschinen eingesetzt. Vorzugsweise wird es zusammen mit einem Maschinenmagazin eingesetzt, dass als Übergabevorrichtung zum Speichern von mehreren Werkzeugen vorgesehen wird.

Dabei ist von Vorteil, dass das Speichervermögen zunächst zwar durch den Durchmesser, im Wesentlichen jedoch durch die Zahl der Windungen in der Spirale bestimmt wird. Die Laufbahn lässt die Anordnung in einer Spirale zu, da an ihr nur Werkzeugschlitten verfahren werden, die geeignet so ausgelegt sein können, dass sie an sich spiralartig nach oben schraubenden Windungen der Laufbahn entlang fahren können.

Höhe und Steigung der Laufbahn in der Spirale hängen dabei auch von der Höhe der einzulagernden Werkzeuge ab.

Ein Vorteil der Anordnung als Laufbahn-Spirale besteht darin, dass in der Spirale ein kontinuierlicher Übergang von "Etage zu Etage" erfolgt, so dass keine besonderen Maßnahmen erforderlich sind, damit die Werkzeugschlitten längs der gesamten Laufbahn fahren können.

Soll die Speicherkapazität des neuen Werkzeugmagazins erhöht werden, so sind lediglich mehr Windungen in der Spirale vorzusehen, alle anderen Komponenten, insbesondere aber die Aufstellfläche, müssen nicht verändert werden.

Die der Erfindung zugrunde liegende Aufgabe wird auf diese Weise vollkommen gelöst.

Insbesondere ist es dabei bevorzugt, wenn die Laufbahn in Form von zwei Spiralen angeordnet ist.

Hier ist von Vorteil, dass sich die Speicherkapazität verdoppelt ohne dass die Aufstellfläche verdoppelt werden muss. Da die Laufbahn in sich geschlossen ist, durchläuft sie beide Spiralen, so dass z.B. nur eine einzige Übergabeposition für beide Spiralen erforderlich ist. Die beiden Spiralen sind dabei vorzugsweise nebeneinander angeordnet. Es ist erfindungsgemäß aber auch vorgesehen, die beiden Spiralen koaxial zueinander anzuordnen, so dass sich eine Spirale mit kleinerem Außendurchmesser koaxial in einer Spirale mit größerem Außendurchmesser befindet.

Bevorzugt sind die beiden Spiralen dabei gegensinnig gewickelt und an ihren oberen sowie unteren Enden miteinander verbunden.

Hier ist von Vorteil, dass die Laufbahn selbst kurz ausgelegt sein kann, denn die Werkzeugschlitten fahren die eine Spirale hoch, wechseln zur anderen und fahren dort wieder herunter. Die Spiralen können so sehr eng nebeneinander angeordnet werden, wobei der Übergang der Werkzeugschlitten von einer Spirale zur anderen kontinuierlich erfolgt.

Insgesamt ist diese Anordnung zudem konstruktiv sehr einfach aufgebaut.

Wenn zwischen den beiden Spiralen eine Übergabeposition vorgesehen ist, an der Werkzeuge an die Werkzeugmaschine abgegeben und/oder von der Werkzeugmaschine aufgenommen werden, reduziert sich die Aufstellfläche noch einmal.

Allgemein ist es bevorzugt, wenn in zumindest einer der Spiralen ein Antriebszylinder mit einer nach außen weisenden Zylinderfläche angeordnet ist, die Laufbahn in dieser Spirale der Zylinderfläche folgt und an der Zylinderfläche ein Antriebsmittel vorgesehen ist, das einen Werkzeugschlitten längs der Laufbahn verschiebt, wobei bevorzugt der Antriebszylinder um seine Zylinderhochachse drehangetrieben ist, das Antriebsmittel zumindest eine nach außen offene Mitnehmernut an der Zylinderfläche umfasst, die sich schräg oder parallel zu der Zylinderhochachse erstreckt, und wenn an zumindest einem Werkzeugschlitten ein Führungsteil vorgesehen ist, das in die Mitnehmernut eingreift, wenn sich der Werkzeugschlitten in der Spirale befindet.

Diese Maßnahmen schaffen einen sehr einfachen Antrieb für das Verfahren der Werkzeugschlitten an der Laufbahn. Auf den Spiralen werden sie durch die Mitnehmernuten mitgenommen, zwischen den Spiralen durch von den Spiralen nachschiebende Werkzeugschlitten vorwärts bewegt. Der Antrieb erfolgt beim Drehen des Antriebszylinders dadurch, dass sich die Mitnehmernut unter der Laufbahn vorbeibewegt und dabei den Werkzeugschlitten, dessen Führungsteil in der Mitnehmernut sitzt, in Umfangsrichtung längs der Laufbahn mitnimmt und auf dieser so spiralförmig nach oben schiebt.

Die Werkzeugschlitten werden somit einzeln bewegt, wenn sie in den Spiralen laufen, und zu wenigen nebeneinander verschoben, wenn sie sich zwischen den Spiralen befinden. Dies trägt dazu bei, dass die mechanischen Anforderungen an die Werkzugschlitten gering sind.

Unter einer Spirale, die "der Zylinderfläche folgt", wird eine zylindrische Struktur der Spirale verstanden, also mit etwa gleichen Durchmessern aller oder der meisten Windungen, wobei die Laufbahn in der Spirale dicht an der Zylinderfläche entlang läuft, so dass das Führungsteil nur einen kurzen Abstand überspannen muss, bis es in die dazu nach außen offene Mitnehmernut eingreift.

Die Mitnehmernut kann senkrecht verlaufen. Wenn sie die Zylinderhochachse jedoch unter einem Winkel schneidet, laufen die Werkzeugschlitten in bestimmten Ausgestaltungen jedoch leichter auf der Laufbahn. Die Steigung der Laufbahn und der Winkel der Mitnehmernut zu der Zylinderhochachse werden dabei bevorzugt so gewählt, dass Laufbahn und Mitnehmernut sich unter ca. 90° schneiden. Erste Versuche haben ergeben, dass dies eine Anordnung ist, in der der Werkzeugschlitten sehr leicht auf der Laufbahn und das Führungsteil sehr leicht in der Mitnehmernut laufen.

Es reicht dabei aus, wenn eine Mitnehmernut vorgesehen ist, die jeweils einen Werkzeugschlitten zurzeit ein Stück längs der Laufbahn verschiebt. Dabei verschiebt dieser Werkzeugschlitten alle anderen Werkzeugschlitten. Wenn der Werkzeugschlitten dann außer Eingriff mit der Mitnehmernut gerät, gelangt ein neuer Werkzeugschlitten in Eingriff und schiebt die anderen Werkzeugschlitten weiter.

Der Erfinder der vorliegenden Anmeldung hat jedoch erkannt, dass es besonders vorteilhaft ist, wenn umfänglich auf der Zylinderfläche - vorzugsweise gleich verteilt - mehrere parallel zueinander verlaufende Mitnehmernuten angeordnet sind.

Durchmesser der Spirale, Steigung der Laufbahn und Anzahl der Mitnehmernuten können dann so gewählt werden, dass die Werkzeugschlitten in der Spirale vereinzelt werden, so dass sie nicht klemmen, aber die Spirale dennoch dicht mit Werkzeugschlitten bestückt ist.

Dabei ist es bevorzugt, wenn zumindest eine Mitnehmernut sich über die ganze Höhe des Antriebszylinders erstreckt.

Dies sorgt für einen Antrieb und gleichzeitig für Vereinzelung der Werkzeugschlitten über der ganzen Spirale, nur in der oberen und unteren Querverbindung zwischen den Spiralen werden die Werkzeugschlitten geschoben

Jede Mitnehmernut kann dabei an ihrem oberen und ihrem unteren Ende in einer trichterförmigen Erweiterung enden, die als Ein- und Auslauf für die Führungsteile an den Werkzeugschlitten dienen.

Insgesamt ist es bevorzugt, wenn die Laufbahn stangenförmiges Material, vorzugsweise rundes, ovales, rechteckiges oder viereckiges Material umfasst. Das Stangenmaterial kann hohl oder massiv sein.

Hier ist von Vorteil, dass derartige Laufbahnen einfach als Spirale auszubilden sind, wobei die Werkzeugschlitten in Laufbahnkurven nicht klemmen.

Alternativ ist es bevorzugt, wenn die Laufbahn eine Führungsnut aufweist, die in einem Wandteil ausgebildet ist.

Das Wandteil ist dann entweder der Mantel eines Zylindergehäuses oder ein Fahrbahnblech, dass die Spiralen verbindet. Das Zylindergehäuse umschließt dann den jeweiligen Antriebszylinder, in dem die Mitnehmernuten verlaufen. Die Werkzeugschlitten werden in der Führungsnut verschiebbar gelagert und greifen mit ihren Führungsteilen in die Mitnehmernuten ein. Beim Drehen des Antriebszylinders werden die Werkzeugschlitten dann längs der sich spiralförmig in dem Mantel des Zylindergehäuses erstreckenden Führungsnut verschoben. Zwischen den Spiralen kann die Laufbahn dann entweder aus Stangenmaterial gefertigt sein, oder aber eine vorzugsweise gerade verlaufende Führungsnut in einem Fahrbahnblech aufweisen.

Wenn die Laufbahn aus Rundmaterial besteht, kann es von Vorteil sein, wenn zumindest abschnittsweise parallel zu der Laufbahn, insbesondere zwischen den Spiralen, Stützbleche verlaufen die die Werkzeugschlitten daran hindern, um die Längsachse des Rundmaterials zu verkippen. Wenn die Werkzeugschlitten in den Spiralen laufen, werden sie durch die Mitnehmernuten am verkippen gehindert, außerhalb der Spiralen diene dazu die Stützbleche.

Weiter ist es bevorzugt, wenn der Werkzeugschlitten eine Schlittenplatte umfasst, die an ihrer ersten Seite zumindest einen Werkzeughalter aufweist und an ihrer zweiten Seite zumindest zwei Laufräder trägt, mit denen der Werkzeugschlitten verschiebbar an der Laufbahn gelagert ist, wobei vorzugsweise an der zweiten Seite als Führungsteil eine Führungsrolle vorgesehen ist, die in die Mitnehmernuten eingreift.

Diese Maßnahmen sind konstruktiv von Vorteil, denn sie sorgen auf einfache Art und Weise dafür, dass die Werkzeugschlitten an der Laufbahn und in den Mitnehmernuten nicht klemmen.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: in schematischer Seitenansicht eine Werkzeugmaschine, hinter der das neue Werkzeugmagazin aufgebaut ist;
- Fig. 2: in schematischer Vorderansicht das Werkzeugmagazin aus Fig. 1;
- Fig. 3: eine schematische Draufsicht auf das Werkzeugmagazin aus Fig. 2;
- Fig. 4: eine Abwicklung eines Antriebszylinders aus dem Werkzeugmagazin der Fig. 2;
- Fig. 5: eine schematische Seitenansicht eines Werkzeugschlittens für das Werkzeugmagazin aus Fig. 2;
- Fig. 6: eine in Fig. 5 von links gesehene, schematische Ansicht des Werkzeugschlittens aus Fig. 5;
- Fig. 7: in einer Darstellung wie Fig. 2 ein zweites Ausführungsbeispiel des Werkzeugmagazins aus Fig. 1;
- Fig. 8: in einer Darstellung wie Fig. 5 einen Werkzeugschlitten für das Werkzeugmagazin aus Fig. 7; und
- Fig. 9: eine in Fig. 8 von links gesehene, schematische Ansicht des Werkzeugschlittens aus Fig. 8.

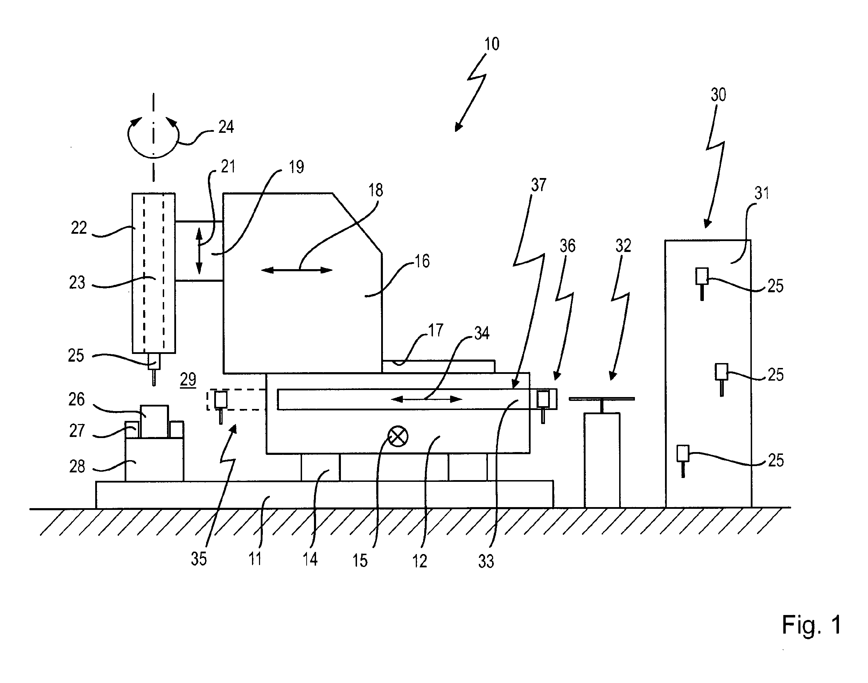

In Fig. 1 ist mit 10 sehr schematisch eine Werkzeugmaschine in Seitenansicht gezeigt. Die Werkzeugmaschine 10 ist eine Fahrständermaschine, bei der auf einem Maschinengestell 11 ein Schlitten 12 angeordnet ist, der auf Führungen 14 in x-Richtung 15 verfahrbar ist.

Auf dem x-Schlitten 12 verfährt ein Fahrständer 16 auf Führungen 17, die sich in y-Richtung 18 erstrecken. An dem Fahrständer 16 ist ein Schlitten 19 angeordnet, der in z-Richtung 21 verfahrbar, also höhenverstellbar ist.

Der Schlitten 21 trägt einen Spindelkopf 22, in dem eine Werkzeugspindel 23 in an sich bekannter Weise um eine Drehachse 24 drehbar gelagert ist.

Die Werkzeugspindel 23 weist an ihrem unteren Ende eine übliche Werkzeugaufnahme zum Einspannen eines Werkzeuges 25 auf, mit dem ein Werkstück 26 bearbeitet wird, das in einer Vorrichtung 27 gehalten wird, die auf einem Werkstücktisch 28 im Arbeitsraum 29 angeordnet ist.

Auf diese Weise kann die Werkzeugmaschine 10 mit Hilfe eines Werkzeuges 25 das Werkstück 26 in den drei orthogonalen Raumachsen 15, 18, 21 bearbeiten.

Hinter der Werkzeugmaschine 10 ist getrennt von dem Maschinengestell 11 ein sehr schematisch angedeutetes Werkzeugmagazin 30 aufgebaut, das als Hintergrundmagazin 31 wirkt und in dem zahlreiche Werkzeuge 25 zwischengelagert sind. Die Werkzeuge werden dabei in Werkzeughalter eingeklemmt, wie es aus dem Stand der Technik an sich bekannt ist.

Lediglich der guten Ordnung halber sei erwähnt, dass die Erfindung auch mit einer Werkzeugmaschine realisierbar ist, bei der die Werkzeugspindel 23 nicht vertikalachsig sondern horizontalachsig ausgerichtet ist, wobei ferner nicht alle drei Bewegungsachsen 15, 18, 21 in dem Werkzeug 25 realisiert sein müssen; zumindest eine Bewegungsachse kann auch in dem Werkstück 26 realisiert sein, wie dies prinzipiell aus dem Stand der Technik bekannt ist.

Zwischen dem Hintergrundmagazin 31 und der Werkzeugmaschine 10 ist eine schematisch dargestellte Entnahmevorrichtung 32 angeordnet, die Werkzeuge in dem Hintergrundmagazin 31 ablegt oder aus dem Hintergrundmagazin 31 entnimmt. Als Entnahmevorrichtung 32 kann beispielsweise ein Doppelgreifer verwendet werden, wie er aus dem eingangs beschriebenen Stand der Technik bekannt ist, sodass wegen weiterer Ausführungen auf diese Dokumente verwiesen wird.

Mit dem Hintergrundmagazin 31 wirkt ein Maschinenmagazin 33 zusammen, das an dem x-Schlitten 12 mitfahrend angeordnet ist. Dieses Maschinenmagazin 33 ist in der durch einen Doppelpfeil 34 angedeuteten Richtung zum einen so verfahrbar, dass es mit seinem vorderen Ende in den Arbeitsraum 29 hineinragt und dort eine Werkzeugwechselposition 35 für die Werkzeugspindel 23 bereitstellt. Die Werkzeugwechselposition 35 ist in Fig. 1 gestrichelt dargestellt.

In der durchgezogen dargestellten Position des Maschinenmagazins 33 befindet es sich mit seinem hinteren Ende in einer Werkzeugaustauschposition 36, in der Werkzeuge 25 zwischen dem Maschinenmagazin 33 und dem Hintergrundmagazin 31 mit Hilfe der Entnahmevorrichtung 32 ausgetauscht werden können.

Das Maschinenmagazin 33 wirkt als Übergabevorrichtung 37, die Werkzeuge 25 aus dem Hintergrundmagazin 31 zwischenspeichert und zum Einwechseln in die Werkzeugspindel 23 bereithält. Das Maschinenmagazin 33 kann beispielsweise dreißig Werkzeuge 25 zwischenspeichern.

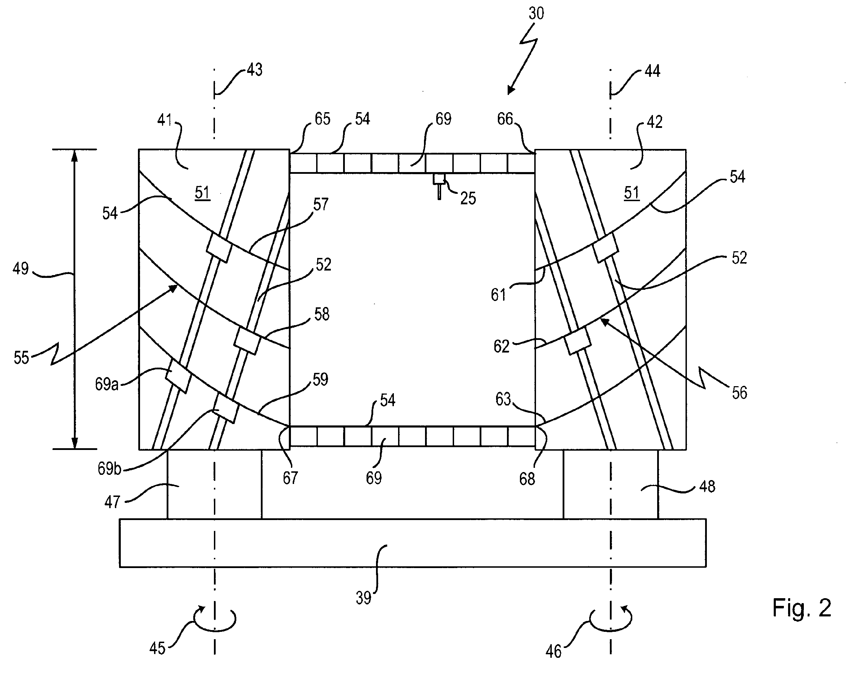

In Fig. 2 ist in das Werkzeugmagazin 30 in schematischer Vorderansicht gezeigt.

Das Werkzeugmagazin 30 weist ein Gestell 39 auf, auf dem nebeneinander zwei Antriebszylinder 41 und 42 angeordnet sind, die jeweils eine Zylinderhochachse 43 bzw. 44 aufweisen, um die sie in Drehrichtung 45 bzw. 46 gegensinnig durch Antriebe 47 bzw. 48 angetrieben sind.

Jeder Antriebszylinder 41, 42 weist eine Höhe 49 sowie eine Zylinderfläche 51 auf.

In jeder Zylinderfläche 51 sind nach außen offene Mitnehmernuten 52 angeordnet, die sich schräg zu der Zylinderhochachse 43 bzw. 44 erstrecken und die gesamte Höhe 49 überstreichen.

Entsprechend der gegensinnigen Drehrichtungen 45 und 46 sind die Mitnehmernuten 52 in den beiden Antriebszylindern 41 bzw. 42 gegensinnig geneigt.

Um die Antriebszylinder 41, 42 herum und zwischen ihnen ist eine in sich geschlossene, dreidimensionale Laufbahn 54 angeordnet, die in zwei Spiralen 55, 56 um die Antriebszylinder 41, 42 herumgelegt sind.

Die Spiralen 55, 56 sind gegensinnig gewickelt, während die Spirale 55 im Uhrzeigersinn aufsteigt, steigt in der Spirale 56 die Laufbahn 54 gegen den Uhrzeigersinn auf.

Die linke Spirale 55 weist drei übereinanderliegende Windungen 57, 58, 59 auf, während die rechte Spirale 56 drei übereinanderliegende Windungen 61, 62, 63 aufweist.

Die Zahl der Windungen sowie die Zahl der Mitnehmernuten 52 ist in Fig. 2 lediglich beispielhaft dargestellt.

An ihren oberen Enden 65, 66 sowie an ihren unteren Enden 67, 68 sind die beiden Spiralen 55, 56 miteinander verbunden, so dass die Laufbahn 54 insgesamt in sich geschlossen ist und eine EndlosLaufbahn bildet.

An der Laufbahn 54 sind längs verschiebbar Werkzeugschlitten 69 angeordnet, die jeweils mit einem Werkzeug 25 bestückt werden können, wie es in Fig. 2 oben zwischen den oberen Enden 65 und 66 beispielhaft gezeigt ist. Die Werkzeugschlitten 69 können somit an bzw. auf der Laufbahn 54 endlos im Kreis oder hin und her geschoben werden.

Die Werkzeugschlitten 69 sind mit einem noch zu beschreibenden Führungsteil versehen, mit dem sie in die Mitnehmernuten 52 eingreifen. Beim Drehen des Antriebszylinders 41 bzw. 42 werden die Werkzeugschlitten 69 daher längs der Laufbahn 54 auf dem Antriebszylinder 41 spiralförmig nach oben und auf dem Antriebszylinder 42 spiralförmig nach unten bewegt..

Wenn die Werkzeugschlitten 69 die Spirale 55 an ihrem oberen Ende 65 verlassen, sind sie folglich ohne Antrieb, so dass sie sich zwischen den beiden oberen Enden 65 und 66 ansammeln, wie dies in Fig. 2 gezeigt ist. Der nächste Werkzeugschlitten 69, der jetzt die Spirale 55 am oberen Ende 65 verlässt, drückt den rechten Führungsschlitten 69 jetzt an dem oberen Ende 66 der Spirale 56 nach rechts auf den Antriebszylinder 42, wo er in Eingriff mit den dortigen Mitnehmernuten 52 gelangt und beim Drehen des Antriebszylinders 42 allmählich nach unten bewegt wird.

Auch zwischen den unteren Enden 67 und 68 der Spiralen 55 und 56 sind die Werkzeugschlitten 69 ohne Antrieb, sie werden in Fig. 2 dort von rechts nach links gedrückt, wenn ein weiterer Werkzeugschlitten 69 die rechte Spirale 56 verlässt.

Werden die Antriebszylinder 41, 42 jeweils in die entgegensetzten Richtungen gedreht, so bewegen sich die Werkzeugschlitten 69 auf dem Antriebszylinder 41 spiralförmig nach unten und auf dem Antriebszylinder 42 spiralförmig nach oben und oben zwischen den Spiralen 55 und 56 entsprechend von rechts nach links.

Mit jeder Drehung eines Antriebszylinders 41, 42 wird ein Werkzeugschlitten, der in Eingriff mit einer entsprechenden Mitnehmernut 52 ist, genau durch eine der Windungen 57, 58, 59; 61, 62, 63 gefahren.

Durch die Zahl der Mitnehmernuten 52 bzw. durch ihren Abstand zueinander in Umfangsrichtung der Antriebszylinder 41, 42 werden die Werkzeugschlitten 69 in den Spiralen 55 und 56 vereinzelt, so dass sie nicht in Anlage miteinander sind, sondern längs der Laufbahn 54 einen gewissen Abstand zueinander aufweisen, wie dies auf dem linken Antriebszylinder 41 für die Werkzeugschlitten 69a und 69b gezeigt ist. Auf diese Weise wird vermieden, dass sich die bei Drehung der Antriebszylinder 41, 42 die in den Spiralen 55, 56 längs der Laufbahn 54 bewegten Werkzeugschlitten 69 verkeilen oder verklemmen.

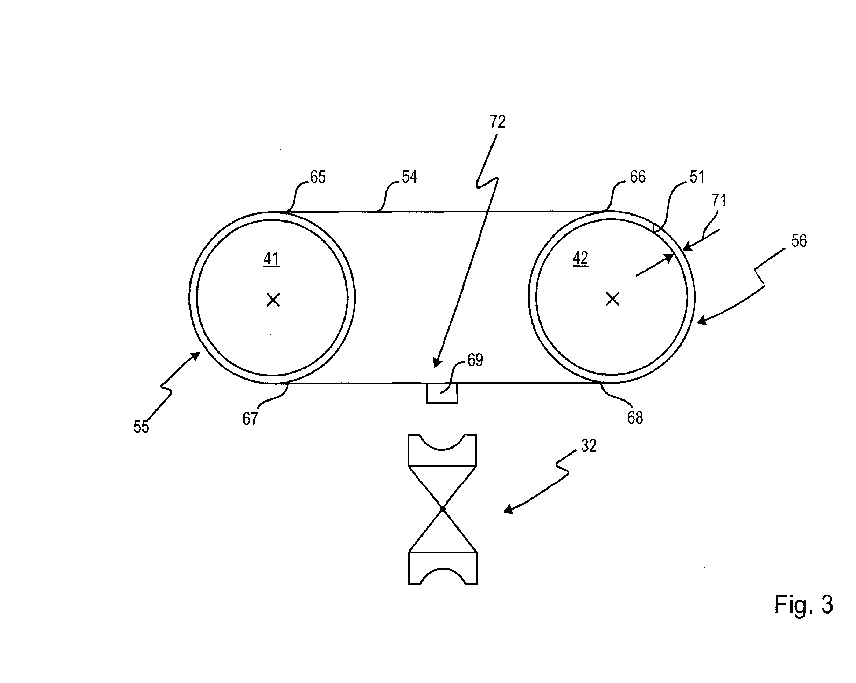

In Fig. 3 ist das Werkzeugmagazin 30 aus Fig. 2 in schematischer Draufsicht gezeigt.

In Fig. 3 ist zunächst zu erkennen, dass die Laufbahn 54 in sich geschlossen ist und im Bereich der Spiralen 55 und 56 den Zylinderflächen 51 folgt, zu denen sie einen geringen Abstand 71 aufweisen.

Zwischen den Spiralen 55 und 56, genauer zwischen ihren unteren Enden 67 und 68, ist eine Übergabeposition 72 vorgesehen, an der in Fig. 3 ein Werkzeugschlitten 69 gezeigt ist, dem gegenüber die aus Fig. 1 bekannte Entnahmevorrichtung 32 angeordnet ist.

An der Übergabeposition 72 können Werkzeuge aus Werkzeugschlitten 69 entnommen oder in freie Werkzeugschlitten 69 eingelegt werden.

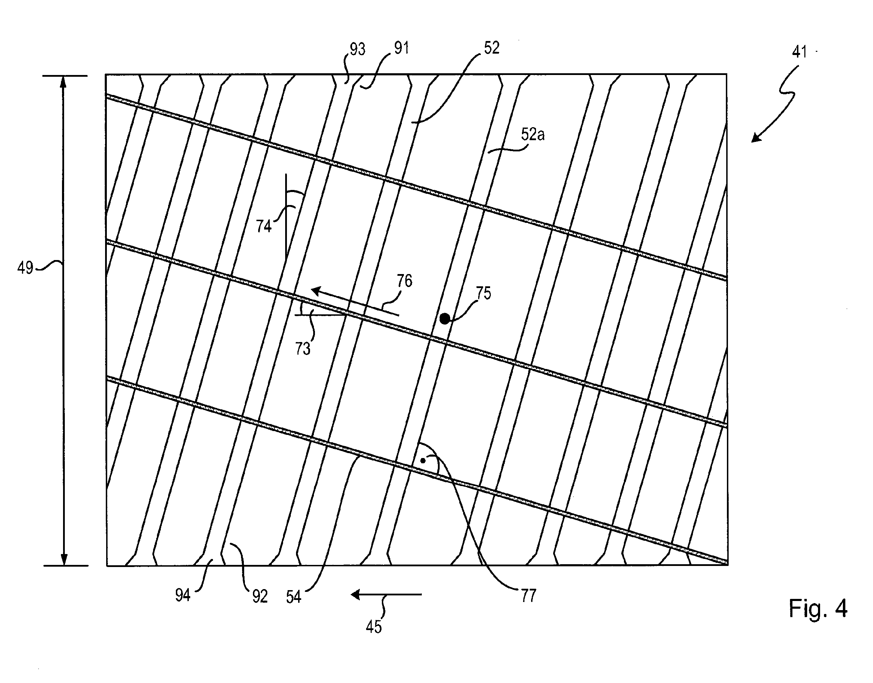

In Fig. 4 ist eine Abwicklung des Antriebszylinders 41 gezeigt, auf dessen Zylinderfläche 51 insgesamt neun Mitnehmernuten 52 gleich verteilt angeordnet sind, die etwa senkrecht zu der Fahrsbahn 54 verlaufen.

Dieser rechte Winkel zwischen der Laufbahn 54 und den Mitnehmernuten 52 ergibt sich einerseits aus der bei 73 angedeuteten Steigung der Laufbahn 54 sowie andererseits aus dem Winkel 74, unter dem die Führungsbahnen 52 die Zylinderhochachse schneiden.

Bei 75 ist in Fig. 4 ein Führungsteil schematisch im Schnitt gezeigt, das in noch zu beschreibender Weise an einem in Fig. 4 nicht gezeigten Werkzeugschlitten 69 ausgebildet ist. Das Führungsteil greift in die Mitnehmernut 52a ein.

Wenn sich jetzt der Antriebszylinder 41 in die in Fig. 2 gezeigte Drehrichtung 45 dreht, bewegt er sich in Fig. 4 unter der Laufbahn 54 hinweg, was durch den Pfeil 45 unten in Fig. 4 gezeigt ist.

Bei dieser Bewegung nimmt die Mitnehmernut 52 das Führungsteil 75 mit, so dass es sich wegen des an der Laufbahn 54 verschiebbar gelagerten Werkzeugschlittens in Richtung eines Pfeils 76 längs der Laufbahn 54 in der Spirale 55 nach oben bewegt.

Weil zwischen der Laufbahn 54 und den Mitnehmernuten 52 ein bei 77 angedeuteter etwa rechter Winkel vorherrscht, lässt sich so bei Drehung eines Antriebszylinders 41 ein Werkzeugschlitten ohne große Reibungsverluste längs der Laufbahn 54 entweder in der Spirale 55 nach oben oder in der Spirale 56 nach unten bewegen.

Die Mitnehmernuten 52 stellen dabei das Antriebsmittel für die Bewegung der Werkzeugschlitten 69 dar.

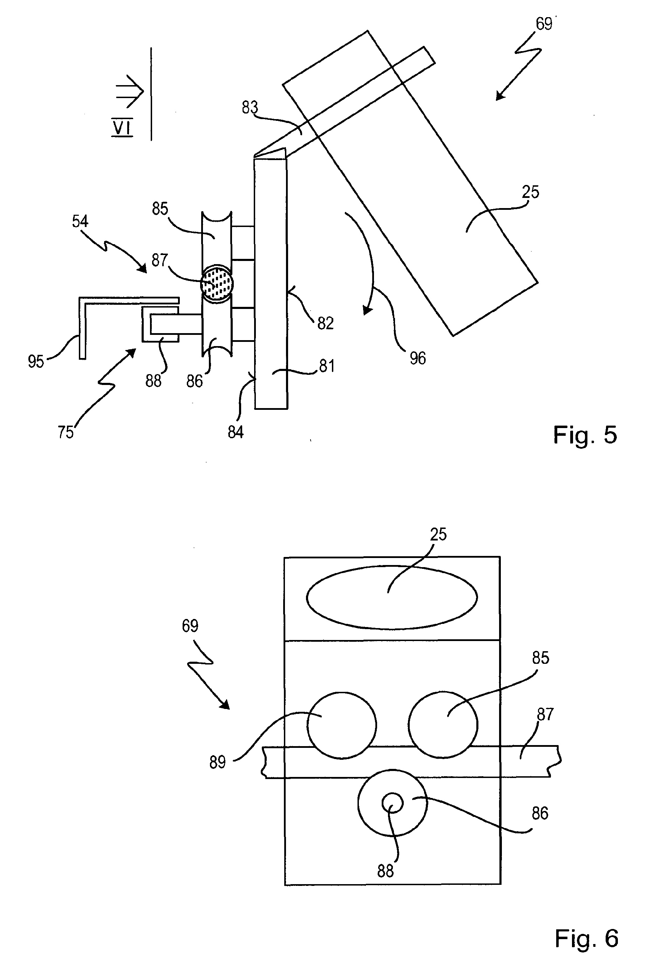

In Fig. 5 ist in schematischer Seitenansicht ein Werkzeugschlitten 69 gezeigt, der eine rechteckige Schlittenplatte 81 aufweist, auf deren rechter Seite 82 ein abgewinkelter Werkzeughalter 83 angeordnet ist, in den ein schematisch angedeutetes Werkzeug 25 eingespannt ist. Das Werkzeug 25 ist leicht geneigt zu der Schlittenplatte 61, so dass es bei Verfahren in den Spiralen 55, 56 leicht mit seiner Unterseite nach außen zeigt.

An ihrer linken Seite 84 ist die Schlittenplatte 81 mit zwei Laufrädern 85, 86 versehen, zwischen denen die Laufbahn 54 verläuft, die aus einem stangenförmigen Material, hier einem Rundmaterial 87 wie Stahldraht gefertigt ist.

Dieses Rundmaterial 87 ermöglicht es übrigens, die Laufbahn 54 in den Spiralen 55 und 56 mit kontinuierlichen Übergängen so anzuordnen, dass die Laufräder 85, 86 ohne Klemmen und Stocken längs der Laufbahn 54 verlaufen können.

An dem unteren Laufrad 56 ist noch eine drehbare Führungsrolle 88 angeordnet, die als Führungsteil 65 dient und in die Mitnehmernuten 52 eingreift.

Damit die Führungsrolle 88 ruckfrei in die Mitnehmernuten 52 einlaufen und aus ihnen auch ruckfrei wieder auslaufen können, sind die Mitnehmernuten 52 an ihrem oberen Ende 91 sowie an ihrem unteren Ende 92 jeweils mit trichterförmigen Erweiterungen 93 bzw. 94 versehen, die in Fig. 4 gezeigt sind.

In Fig. 6 ist der Werkzeugschlitten 69 aus Fig. 5 in einer Ansicht von links in Fig. 5 gezeigt.

Der Fig. 6 ist zu entnehmen, dass neben dem oberen Laufrad 85 noch ein weiteres Laufrad 89 vorgesehen ist, so dass das Rundmaterial 87 der Laufbahn 54 zwischen drei Laufrädern 85, 86, 89 verläuft, die symmetrisch zueinander angeordnet sind. Auf diese Weise wird verhindert, dass der Werkzeugschlitten 69 sich unbeabsichtigt von der Laufbahn 54 löst.

Schematisch ist in Fig. 6 noch ein Stützblech 95 angedeutet, mit dem die Führungsrolle 88 in Anlage ist, wenn sich der Werkzeugschlitten 69 außerhalb der Spiralen 55, 56, also in den geraden Laufbahnstrecken zwischen den oberen Enden 65 und 66 oder zwischen den unteren Enden 67 und 68, befindet.

Das Stützblech 95 verhindert es, dass der Werkzeugschlitten 69 sich in Richtung eines Pfeiles 96 um die Längsachse des Rundmaterials 87 verkippt.

Ein solches Verkippen wird durch die Anlage der Führungsrolle 88 in den Mitnehmernuten 52 ebenfalls verhindert

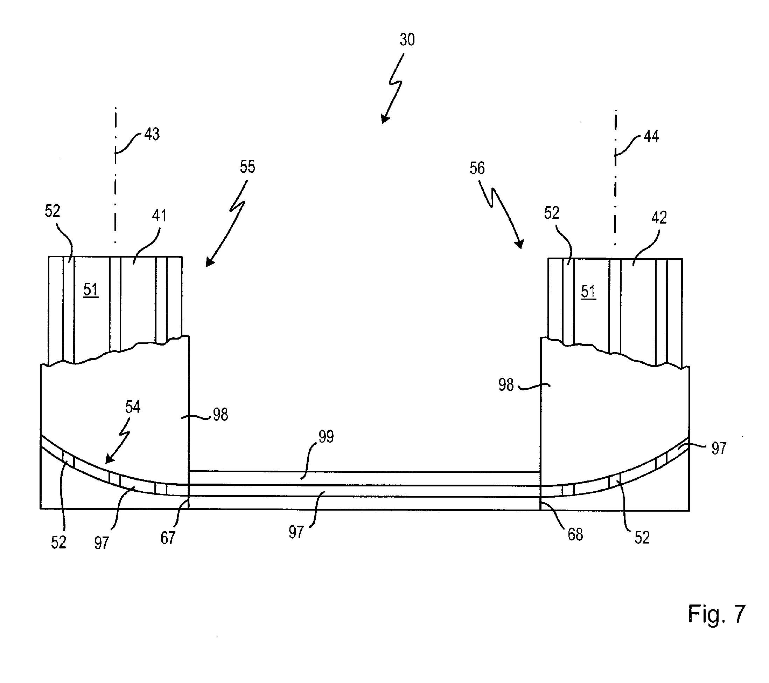

In Fig. 7 ist in einer Darstellung wie Fig. 2 ein weiteres Ausführungsbeispiel eines Werkzeugmagazins 30' gezeigt.

Das Werkzeugmagazin 30' umfasst wie das Werkzeugmagazin 30 in Fig. 3 zwei Spiralen 55 und 56, die jeweils einen Antriebszylinder 41 und 42 aufweisen, der um eine Zylinderhochachse 43 bzw. 44 angetrieben ist.

In den Zylinderflächen 51 der Antriebszylinder 41, 42 sind auch hier Mitnehmernuten 52 vorgesehen, die jetzt jedoch nicht nur parallel zueinander sondern auch parallel zu den Zylinderhochachsen 43 bzw. 44 verlaufen.

Die Laufbahn 54 ist hier durch eine Führungsnut 97 gebildet, die in Zylindermänteln 98 verläuft, die als zylindrische Gehäuse die Antriebszylinder 41 und 42 umgeben. In den Zylindermänteln 98 sind also nach innen zu den Antriebszylindern 41, 42 hin durchgehend offene Führungsnuten 97 vorgesehen.

In Fig. 7 sind die Zylindermäntel 98 teilweise gebrochen dargestellt, so dass oberhalb der Bruchlinie Teile der Antriebszylinder 41, 42 zu erkennen sind.

In jedem Zylindermantel 98 verläuft die Führungsnut 97 spiralförmig so, wie dies ausführlicher in den Figuren 2 und 4 allgemein für die Laufbahn 54 gezeigt und in der zugehörigen Figurenbeschreibung oben ausführlich erläutert ist.

Zwischen den unteren Enden 67 und 68 der Spiralen 55 und 56 erstreckt sich ein Fahrbahnblech 99, in dem ebenfalls die Führungsnut 97 verläuft.

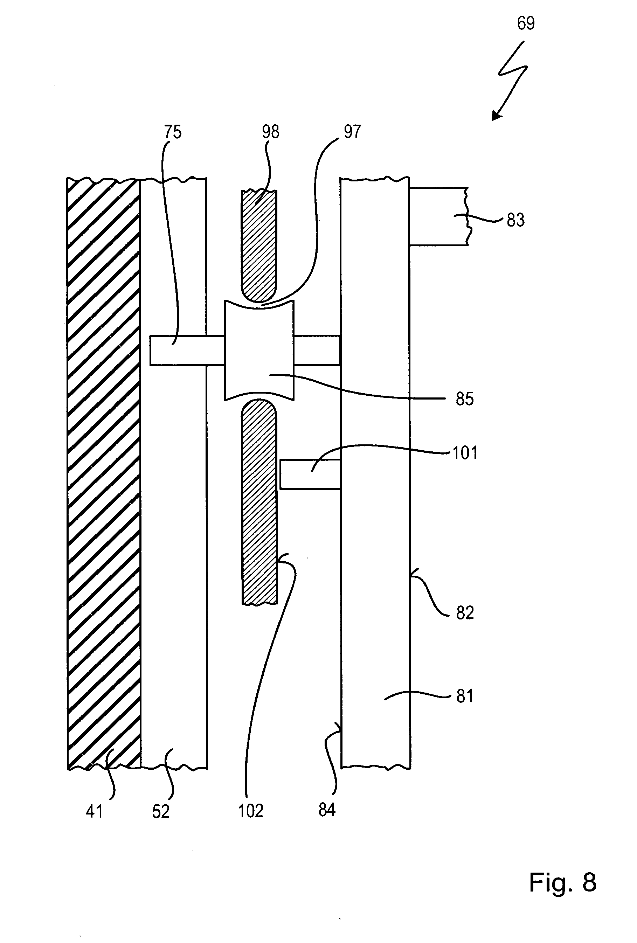

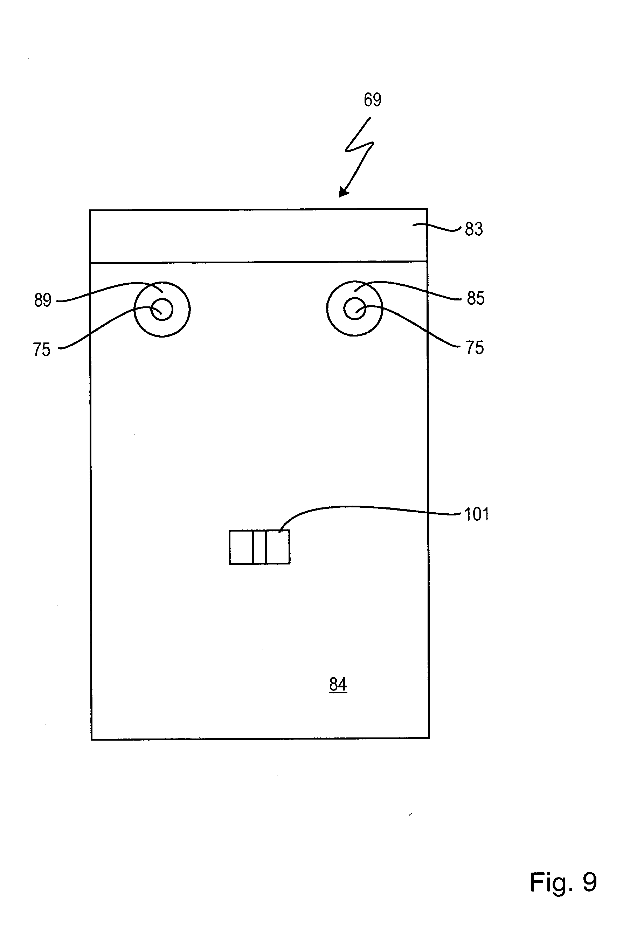

Das Werkzeugmagazin 30' funktioniert identisch zu dem Werkzeugmagazin 30 aus den Figuren 2 bis 6, wobei jetzt der Werkzeugschlitten 69 so aufgebaut ist, wie dies in den Figuren 8 und 9 dargestellt ist.

Der Werkzeugschlitten 69 weist wieder die Schlittenplatte 81 auf, an deren rechter Seite 82 ein Werkzeughalter 83 angeordnet ist, der hier lediglich gebrochen dargestellt ist.

Auf der linken Seite 84 sind an der Schlittenplatte 81 wieder die beiden Laufrollen 85 und 89 angeordnet, die nebeneinander liegen, so dass sie beide in die Führungsnut 97 eingreifen, wie dies in Fig. 8 schematisch dargestellt ist.

Die Führungsnut 97 verläuft in dem in Fig. 8 geschnitten dargestellten Zylindermantel 98. In Fig. 8 links neben dem Zylindermantel 98 ist der Antriebszylinder 41 geschnitten dargestellt, wobei das Führungsteil 75 des Werkzeugschlittens 69 hier mit dem Laufrad 85 verbunden ist und in die Mitnehmernut 52 hineinragt.

Damit der Werkzeugschlitten 69 nicht verkippt, ist unterhalb der Laufräder 85, 86 ein Distanzteil 101 angeordnet, mit dem sich die Schlittenplatte 81 auf einer Mantelfläche 102 des Zylindermantels 98 abstützt.

## Patentansprüche

1. Werkzeugmagazin für eine Werkzeugmaschine (10) mit einer Werkzeugspindel (23), in die Werkzeuge (25) zur Bearbeitung von Werkstücken (26) einspannbar sind, wobei in dem Werkzeugmagazin (30) Werkzeughalter (83) vorgesehen sind, in denen zum Einwechseln in die Werkzeugspindel (23) vorgesehene Werkzeuge (25) ablegbar sind, und wobei für die Werkzeughalter (83) eine in sich geschlossene, dreidimensionale Laufbahn (54) vorgesehen ist,
**dadurch gekennzeichnet, dass** an der Laufbahn (54) Werkzeugschlitten (69) verschiebbar gelagert sind, an denen die Werkzeughalter (83) ausgebildet sind, und dass die Laufbahn (54) in Form zumindest einer Spirale (55, 56) mit vertikal übereinander verlaufenden Windungen (57, 58, 59; 61, 62, 63) angeordnet ist.

2. Werkzeugmagazin nach Anspruch 1, **dadurch gekennzeichnet, dass** die Laufbahn (54) in Form von zwei Spiralen (55, 56) angeordnet ist.

3. Werkzeugmagazin nach Anspruch 2, **dadurch gekennzeichnet, dass** die beiden Spiralen (55, 56) gegensinnig gewickelt und an ihren oberen (65, 66) sowie unteren (67, 68) Enden miteinander verbunden sind.

4. Werkzeugmagazin nach Anspruch 2 oder 3, **dadurch gekennzeichnet, dass** zwischen den beiden Spiralen (55, 56) eine Übergabeposition (72) vorgesehen ist, an der Werkzeuge (25) an die Werkzeugmaschine (10) abgegeben und/oder von der Werkzeugmaschine (10) aufgenommen werden.

5. Werkzeugmagazin nach einem der Ansprüche 1 bis 4, **dadurch gekennzeichnet, dass** in zumindest einer der Spiralen (55, 56) ein Antriebszylinder (41, 42) mit einer nach außen weisenden Zylinderfläche (51) angeordnet ist, die Laufbahn (54) in dieser Spirale (55, 56) der Zylinderfläche (51) folgt, und an der Zylinderfläche (51) ein Antriebsmittel (52) vorgesehen ist, das einen Werkzeugschlitten (69) längs der Laufbahn (54) verschiebt.

6. Werkzeugmagazin nach Anspruch 5, **dadurch gekennzeichnet, dass** der Antriebszylinder (41, 42) um seine Zylinderhochachse (43, 44) drehangetrieben ist, das Antriebsmittel (52) zumindest eine nach außen offene Mitnehmernut (52) an der Zylinderfläche (51) umfasst, die sich schräg oder parallel zu der Zylinderhochachse (43, 44) erstreckt, und dass an zumindest einem Werkzeugschlitten (69) ein Führungsteil (75) vorgesehen ist, das in die Mitnehmernut (72) eingreift, wenn sich der Werkzeugschlitten (69) in der Spirale (55, 56) befindet.

7. Werkzeugmagazin nach Anspruch 6, **dadurch gekennzeichnet, dass** umfänglich auf der Zylinderfläche (51) mehrere parallel zueinander verlaufende Mitnehmernuten (52) angeordnet sind.

8. Werkzeugmagazin nach Anspruch 6 oder 7, **dadurch gekennzeichnet, dass** zumindest eine Mitnehmernut (52) sich über die ganze Höhe (49) des Antriebszylinders (41, 42) erstreckt.

9. Werkzeugmagazin nach einem der Ansprüche 1 bis 8, **dadurch gekennzeichnet, dass** die Laufbahn (54) stangenförmigem Material (87) umfasst.

10. Werkzeugmagazin nach einem der Ansprüche 1 bis 8, **dadurch gekennzeichnet, dass** die Laufbahn (54) eine Führungsnut (97) aufweist, die in einem Wandteil (98, 99) ausgebildet ist.

11. Werkzeugmagazin nach Anspruch 9 oder 10, **dadurch gekennzeichnet, dass** der Werkzeugschlitten (69) eine Schlittenplatte (81) umfasst, die an ihrer ersten Seite (82) zumindest einen Werkzeughalter (83) aufweist und an ihrer zweiten Seite (84) zumindest zwei Laufräder (85, 86, 89) trägt, mit denen der Werkzeugschlitten (69) verschiebbar an der Laufbahn (54) gelagert ist.

12. Werkzeugmagazin nach Anspruch 11, **dadurch gekennzeichnet, dass** an der zweiten Seite (84) als Führungsteil (75) eine Führungsrolle (88) vorgesehen ist, die in die Mitnehmernuten (52) eingreift.

13. Werkzeugmaschine mit einer Werkzeugspindel (23), in die Werkzeuge (25) zur Bearbeitung von Werkstücken (26) einspannbar sind, mit einer Übergabevorrichtung (37), in der zumindest ein zum Einwechseln in die Werkzeugspindel (23) vorgesehenes Werkzeug (25) vorrätig gehalten wird, und mit einem Hintergrundmagazin (31), in dem zum Einwechseln in die Übergabevorrichtung (37) vorgesehene Werkzeuge (25) vorrätig gehalten werden, **dadurch gekennzeichnet, dass** das Hintergrundmagazin (31) das Werkzeugmagazin (30) aus einem der Ansprüche 1 bis 12 ist.

14. Werkzeugmaschine nach Anspruch 13, **dadurch gekennzeichnet, dass** die Übergabevorrichtung (37) ein Maschinenmagazin (33) ist, in dem mehrere Werkzeuge (25) bereitgehalten werden.

## Claims

1. Tool magazine for a machine tool (10) having a tool spindle (23) in which tools (25) for machining workpieces (26) can be chucked, wherein tool holders (83), in which tools (25) intended to be exchanged into the tool spindle (23) are storable, are provided in the tool magazine (30), and wherein a three-dimensional running track (54) that is closed in itself is provided for the tool holder (83),
**characterized in that** tool carriages (69), on which the tool holders (83) are formed, are mounted in a displaceable manner on the running track (54), and **in that** the running track (54) is arranged in the form of at least one spiral (55, 56) having turns (57, 58, 59; 61, 62, 63) that extend vertically one above another.

2. Tool magazine according to Claim 1, **characterized in that** the running track (54) is arranged in the form of two spirals (55, 56).

3. Tool magazine according to Claim 2, **characterized in that** the two spirals (55, 56) are wound in opposite directions and are connected together at their top ends (65, 66) and their bottom ends (67, 68).

4. Tool magazine according to Claim 2 or 3, **characterized in that** between the two spirals (55, 56) a transfer position (72) is provided, at which transfer position tools (25) are delivered to the machine tool (10) and/or are received from the machine tool (10).

5. Tool magazine according to one any of Claims 1 to 4, **characterized in that** a drive cylinder (41, 42) having an outwardly directed cylinder surface (51) is arranged in at least one of the spirals (55, 56), the running track (54) follows the cylinder surface (51) in this spiral (55, 56), and a drive means (52), which displaces a tool carriage (69) along the running track (54), is provided at the cylinder surface (51).

6. Tool magazine according to Claim 5, **characterized in that** the drive cylinder (41, 42) is driven for rotation about its vertical cylinder axis (43, 44), the drive means (52) comprises at least one outwardly open keyway (52) on the cylinder surface (51), which keyway extends in an inclined or parallel manner with respect to the vertical cylinder axis (43, 44), and **in that** a guide part (75), which engages in the keyway (72) when the tool carriage (69) is located in the spiral (55, 56), is provided on at least one tool carriage (69).

7. Tool magazine according to Claim 6, **characterized in that** a plurality of keyways (52) that extend parallel to one another are arranged on the circumference of the cylinder surface (51).

8. Tool magazine according to Claim 6 or 7, **characterized in that** at least one keyway (52) extends over the entire height (49) of the drive cylinder (41, 42).

9. Tool magazine according to anyone of Claims 1 to 8, **characterized in that** the running track (54) comprises rod-like material (87).

10. Tool magazine according to anyone of Claims 1 to 8, **characterized in that** the running track (54) has a guide groove (97) which is formed in a wall part (98, 99).

11. Tool magazine according to Claim 9 or 10, **characterized in that** the tool carriage (69) comprises a carriage plate (81) which has at least one tool holder (83) on its first side (82) and carries at least two running wheels (85, 86, 89), by way of which the tool carriage (69) is mounted in a displaceable manner on the running track (54), on its second side (84).

12. Tool magazine according to Claim 11, **characterized in that** a guide roller (88) which engages in the keyways (52), is provided as the guide part (75) on the second side (84).

13. Machine tool having a tool spindle (23) in which tools (25) for machining workpieces (26) can be chucked, having a transfer device (37) in which at least one tool (25) intended to be exchanged into the tool spindle (23) is held in store, and having a background magazine (31) in which tools (25) intended to be exchanged into the transfer device (37) are held in store, **characterized in that** the background magazine (31) is the tool magazine (30) from anyone of Claims 1 to 12.

14. Machine tool according to Claim 13, **characterized in that** the transfer device (37) is a machine magazine (33) in which a plurality of tools (25) are held ready.

## Revendications

1. Magasin d'outils pour une machine-outil (10) dotée d'une broche porte-outil (23), dans laquelle des outils (25) destinés à l'usinage de pièces (26) peuvent être insérés, des porte-outils (83) dans lesquels peuvent être déposés des outils (25) destinés à être changés dans la broche porte-outil (23) étant présents dans le magasin d'outils (30), et un chemin de roulement (54) tridimensionnel et fermé sur lui-même étant présent pour les porte-outils (83),
**caractérisé en ce que** des chariots porte-outils (69), sur lesquels les porte-outils (83) sont formés, sont montés de manière à pouvoir se déplacer sur le chemin de roulement (54), et **en ce que** le chemin de roulement (54) est disposé sous la forme d'au mois une spirale (55, 56) présentant des spires (57, 58, 59 ; 61, 62, 63) s'étendant verticalement les unes au-dessus des autres.

2. Magasin d'outils selon la revendication 1, **caractérisé en ce que** le chemin de roulement (54) est disposé sous la forme de deux spirales (55, 56).

3. Magasin d'outils selon la revendication 2, **caractérisé en ce que** les deux spirales (55, 56) sont enroulées en sens inverse et sont reliées l'une à l'autre par leurs extrémités supérieures (65, 66) et inférieures (67, 68).

4. Magasin d'outils selon la revendication 2 ou 3, **caractérisé en ce qu'**une position de transfert (72), dans laquelle des outils (25) peuvent être distribués à la machine-outil (10) et/ou retirés de la machine-outil (10), est présente entre les deux spirales (55, 56).

5. Magasin d'outils selon l'une quelconque des revendications 1 à 4, **caractérisé en ce qu'**un cylindre d'entraînement (41, 42) pourvu d'une surface (51) orientée vers l'extérieur est disposé dans au moins une des spirales (55, 56), le chemin de roulement (54) dans cette spirale (55, 56) succède à la surface (51) du cylindre, et un moyen d'entraînement (52), qui déplace un chariot porte-outil (69) le long du chemin de roulement (54), est présent sur la surface (51) du cylindre.

6. Magasin d'outils selon la revendication 5, **caractérisé en ce que** le cylindre d'entraînement (41, 42) est entraîné en rotation autour de son axe vertical (43, 44), le moyen d'entraînement (52) comprend au moins une rainure d'entraînement (52) ouverte vers l'extérieur sur la surface (51) du cylindre, qui s'étend de manière oblique ou parallèle à l'axe vertical (43, 44) du cylindre, et **en ce qu'**une partie de guidage (75), qui s'insère dans la rainure d'entraînement (72) lorsque le chariot porte-outils (69) se situe dans la spirale (55, 56), est présente sur au moins un chariot porte-outils (69).

7. Magasin d'outils selon la revendication 6, **caractérisé en ce que** plusieurs rainures d'entraînement (52) s'étendant parallèlement les unes aux autres sont ménagées sur toute la périphérie de la surface (51) du cylindre.

8. Magasin d'outils selon la revendication 6 ou 7, **caractérisé en ce qu'**au moins une rainure d'entraînement (52) s'étend sur toute la hauteur (49) du cylindre d'entraînement (41, 42).

9. Magasin d'outils selon l'une quelconque des revendications 1 à 8, **caractérisé en ce que** le chemin de roulement (54) comprend un matériau (87) en forme de barre.

10. Magasin d'outils selon l'une quelconque des revendications 1 à 8, **caractérisé en ce que** le chemin de roulement (54) comprend une rainure de guidage (97) qui est ménagée dans une partie (98, 99) de la paroi.

11. Magasin d'outils selon la revendication 9 ou 10, **caractérisé en ce que** le chariot porte-outil (69) comprend une plaque (81) qui présente sur sa première face (82) au moins un porte-outil (83) et sur sa deuxième face (84) au moins deux roulettes (85, 86, 89) au moyen desquelles le chariot porte-outils (69) est monté de manière à pouvoir se déplacer sur le chemin de roulement (54).

12. Magasin d'outils selon la revendication 11, **caractérisé en ce qu'**un rouleau de guidage (88), qui s'insère dans les rainures d'entraînement (52), est présent sur la deuxième face (84) en tant que partie de guidage (75).

13. Machine-outil comprenant une broche porte-outil (23), dans laquelle les outils (25) destiné à l'usinage de pièces (26) peuvent être insérés, comprenant un dispositif de transfert (37) dans lequel au moins un outil (25) destiné à être échangé dans la broche porte-outil (23) est gardé en stock, et comprenant un magasin d'arrière-plan (31) dans lequel les outils (25) destinés à être échangés dans le dispositif de transfert (37) sont gardés en stock, **caractérisée en ce que** le magasin d'arrière-plan (31) est le magasin d'outil (30) selon l'une quelconque des revendications 1 à 12.

14. Machine-outil selon la revendication 13, **caractérisée en ce que** le dispositif de transfert (37) est un magasin de machine (33) dans lequel plusieurs outils (25) sont mis à disposition.
